# EUROPÄISCHE PATENTSCHRIFT

(11) **EP 1 043 507 B1**
(45) Veröffentlichungstag und Bekanntmachung des Hinweises auf die Patenterteilung: **30.01.2002**
(21) Anmeldenummer: 00104946.9
(22) Anmeldetag: 08.03.2000
(51) Int. Cl.: F16B 5/02

(54) **Vorrichtung zum verspannenden Verbinden von mit Abstand zueinander liegenden Bauteilen**
Device for realizing a bracing connection of parts being situated at distance from each other
Dispositif pour la jonction à haubanage de pièces situées à distance l'une de l'autre

(30) Priorität: 10.03.1999 DE 19910511
(43) Veröffentlichungstag der Anmeldung: 11.10.2000
(73) Patentinhaber: Witte-Velbert GmbH & Co. KG, 42551 Velbert (DE)
(72) Erfinder: Klüting, Bernd, D-42477 Radevormwald (DE); Rückert, Edvard, D-42549 Velbert (DE)
(74) Vertreter: Grundmann, Dirk, Dr.

(56) Entgegenhaltungen:
- EP-A- 0 176 663
- CH-A- 408 540
- DE-C- 3 620 005
- US-A- 5 288 191

## Beschreibung

Die Erfindung betrifft eine Vorrichtung zum verspannenden Verbinden von mit Abstand zueinander liegenden Bauteilen mittels einer Verbindungsschraube, bestehend aus einem in einer Öffnung des ersten Bauteiles durch auseinandergespreizte Dübelarme festlegbarem Stützteil und einem Distanzteil, dessen Stirn zufolge relativer Verdrehung des Distanzteiles zum Stützteil in eine Distanzlage zum ersten Bauteil bringbar ist, wobei das Stützteil ein Einschraubgewinde für die Verbindungsschraube aufweist und das Distanzteil eine dazu fluchtende Durchgriffsöffnung mit Reibschlußmitteln, um beim Einschrauben der Verbindungsschraube bis in eine Anschlagstellung der Stirn an das zweite Bauteil drehmitgeschleppt zu werden.

Eine derartige Vorrichtung ist aus der EP 0 176 663 vorbekannt. Dort besitzt das Stützteil ein linksgängiges Außengewinde, auf welchem das Distanzteil aufgeschraubt ist. Das Distanzteil besitzt eine Durchgriffsöffnung für die Verbindungsschraube. In der Durchgriffsöffnung sind radial einwärts ragende Nasen vorgesehen, die gegen den Gewindeschaft der Schraube wirken, so daß das Distanzteil beim Eindrehen der Schraube mitgedreht wird. Da die Schraube ein Rechtsgewinde aufweist, distanziert sich die Stirnfläche des Distanzteiles beim Eindrehen der Schraube vom Stützteil bis es an das zweite Bauteil anschlägt. Die Verbindungsschraube wird dann weiter gedreht, bis sie in das Einschraubgewinde des Stützteiles eintritt. Das Einschraubgewinde setzt sich fort bis in den Bereich zwischen den dem Stützteil angeformten Spreizarmen, welche dann beim Eintritt des Schraubenschaftes in diesen Bereich auseinander gespreizt werden.

Der Erfindung liegt die Aufgabe zugrunde, eine gattungsgemäße Vorrichtung mit einfachen Mitteln besser vormontierbar zu gestalteten, ohne das die feste Verbindung zwischen Stützteil und erstem Bauteil nach eingedrehter Verbindungsschraube wieder lösbar ist.

Gelöst wird die Aufgabe durch die in den Ansprüchen angegebene Erfindung.

Der Anspruch 1 zielt insbesondere darauf ab, daß ein gesondertes Dübelspreizorgan vorgesehen ist, welches vor dem Eindrehen der Verbindungsschraube im Stütz- und Distanzteil in eine von der eingedrehten Verbindungsschraube abgedeckten Öffnung einbringbar ist.

Während beim Stand der Technik beim Eindrehen der Verbindungsschraube zunächst in das Distanzteil und dann in das Stützteil die Verbindung zwischen Stützteil und erstem Bauteil noch lösbar ist, ist erfindungsgemäß diese Verbindung vor dem Eindrehen der Verbindungsschraube bereits fixiert. Das Dübelspreizorgan wird vor dem Eindrehen der Verbindungsschraube in die noch offene Öffnung des Einschraubgewindes eingebracht und axial verlagert bis die Dübelarme in ihre Spreizstellung gelangt sind und sich in der Öffnung des ersten Bauteils verklemmt haben. Erst bei Abschluß dieser Vormontage des Stützteiles erfolgt das Eindrehen der Verbindungsschraube, so daß anschließend die Stirnseite des Dübelspreizorganes von der Stirnfläche der Verbindungsschraube verdeckt ist. In einer vorteilhaften Ausgestaltung handelt es sich bei dem Dübelspreizorgan um eine Gewindeschraube, die in eine entsprechende Öffnung, die sich dem Einschraubgewinde anschließt eingeschraubt wird. Diese Schraube ist nach dem Eindrehen der Verbindungsschraube nicht mehr zugänglich und liegt in einer allseitig umschlossenen Höhlung. Es ist dabei besonders vorteilhaft, wenn die Öffnung zum Eintritt der Befestigungsschraube einen geringen Durchmesser besitzt, als der Durchmesser des Einschraubgewindes. Dann kann sich im Übergangsbereich eine Stufe ausbilden, auf welcher sich der Kopf der Befestigungsschraube abstützen kann. Es ist aber auch möglich, anstelle einer Schraube mit Schraubkopf eine Madenschraube zu verwenden, da die wesentliche Aufgabe der Befestigungsschraube das Spreizen der Dübelarme ist. Die Stirnseite des Dübelspreizorganes liegt bei eingeschraubter Verbindungsschraube mit Abstand zu deren Stirnseite. Das Stützteil kann in vorteilhafter Weise als Kunststoffteil ausgebildet sein mit materialeinheitlich angeformten Dübelarmen. Ebenso kann das Distanzteil aus Kunststoff bestehen. In der Durchgriffsöffnung des Distanzteiles kann ein Federelement liegen, welches mit radial einwärts weisenden Vorsprüngen die Reibschlußmittel ausbildet. Zufolge dieser Ausgestaltung wird wirksam vermieden, daß sich beim Eindrehen der Verbindungsschraube das Stützteil mit dreht, da es die konstruktiven Maßnahmen zwingend vorsehen, daß die Befestigung des Stützteiles am ersten Bauteil vor dem Eindrehen der Verbindungsschraube erfolgen muß.

Anhand beigefügter Zeichnungen wird nachfolgend ein Ausführungsbeispiel der Erfindung erläutert. Es zeigen:
- Fig. 1: eine vormontierte Vorrichtung an einem ersten Bauteil bei noch nicht verdübelten Dübelarmen,
- Fig. 2: eine Folgedarstellung mit in Wirkung getretenem Dübelspreizorgan,

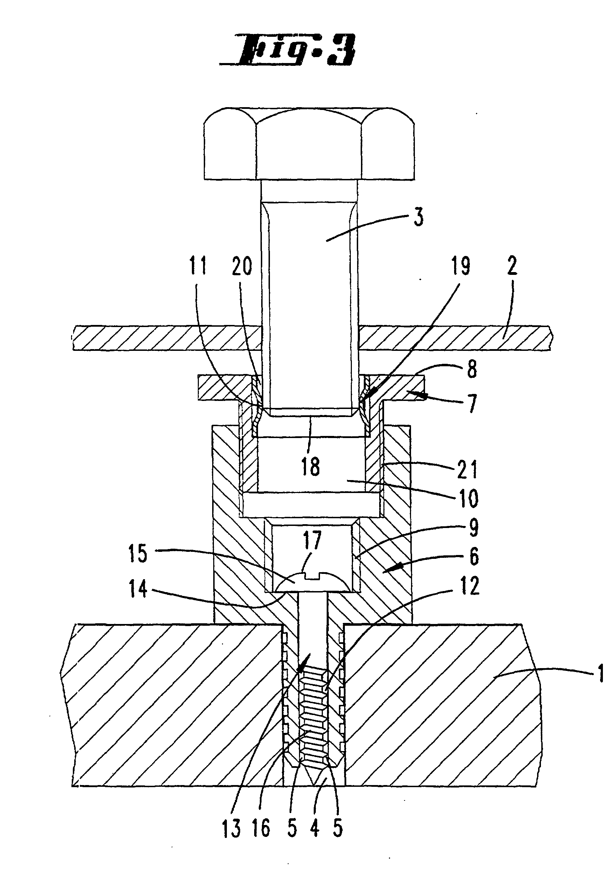

- Fig. 3: eine Folgedarstellung von Fig. 2 mit in Mitschleppwirkung tretender Verbindungsschraube,

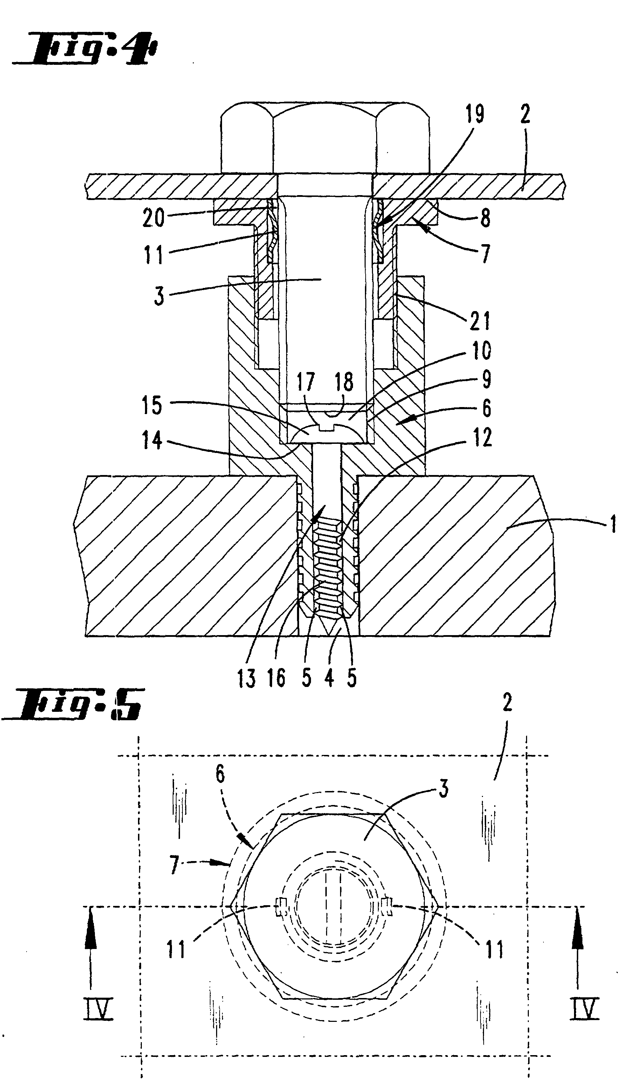

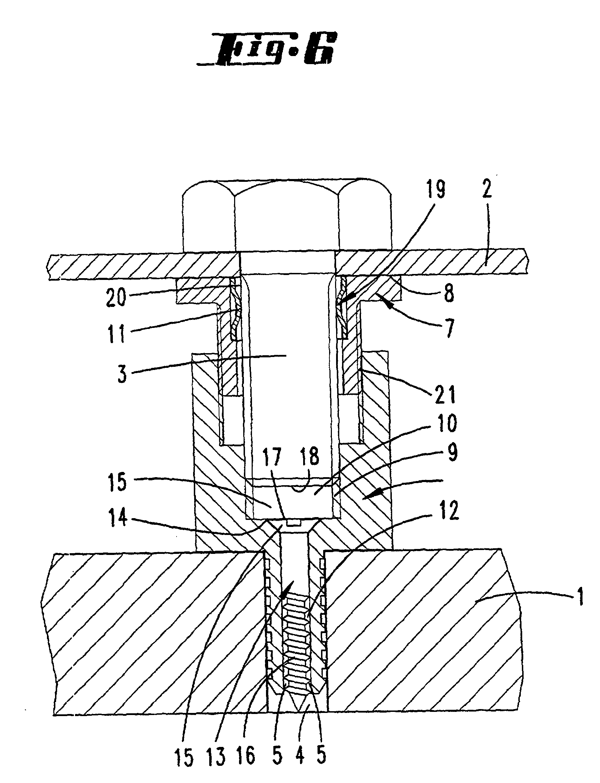

- Fig. 4: die endgültige Montagestellung im Schnitt der Linie IV-IV in Fig. 5,
- Fig. 5: eine Draufsicht und
- Fig. 6: eine Darstellung gemäß Fig. 4 eines zweiten Ausführungsbeispieles betreffend die Befestigungsschraube.

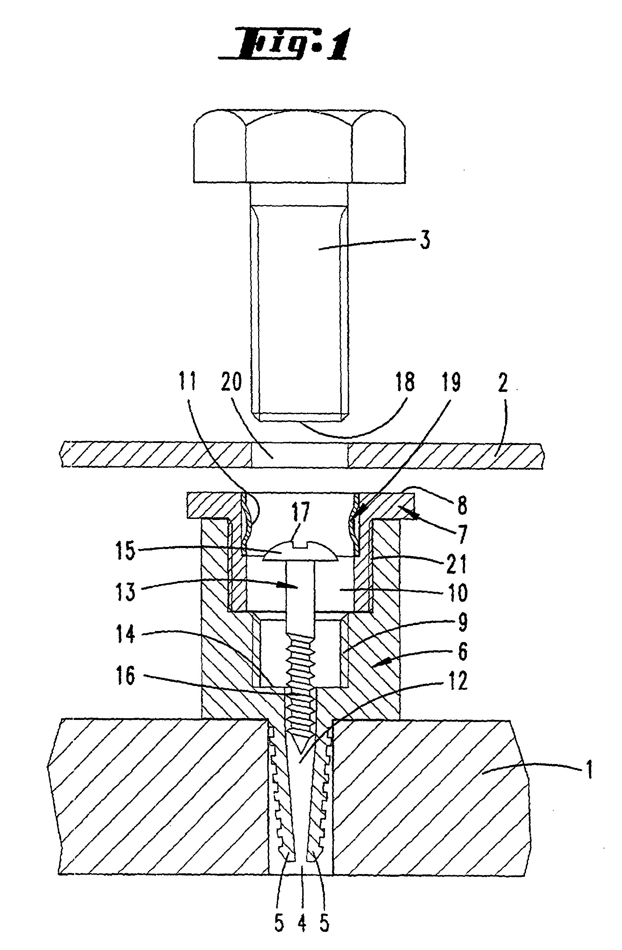

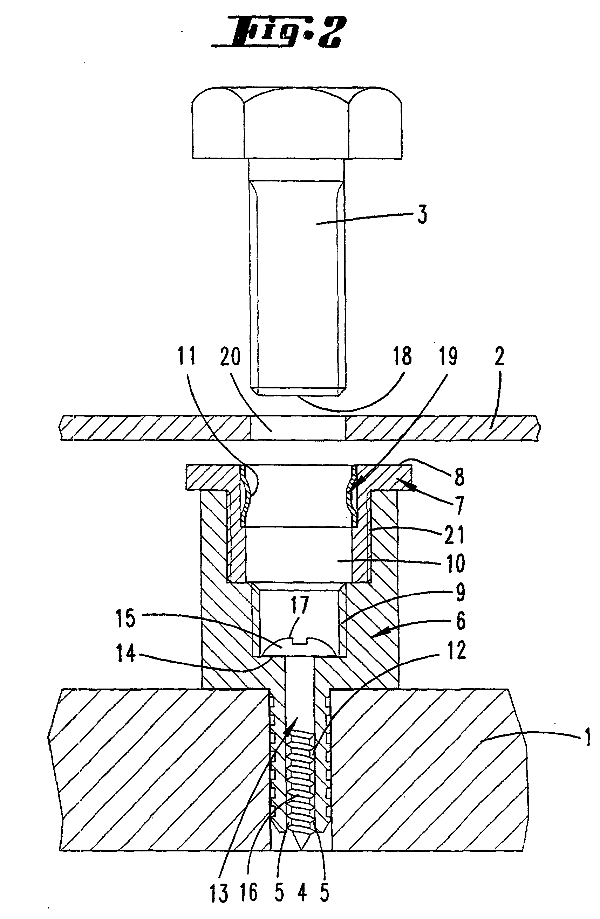

In den Figuren 1 und 2 ist die Verbindungsschraube 3 nur der Vollständigkeit halber vor der Öffnung 20 des zweiten Bauelementes 2 dargestellt. Zur Vormontage der Vorrichtung, welche aus einem Stützteil 6 und aus einem Distanzteil 7 besteht, wird das Stützteil 6 mit in einem Linksgewinde 21 eingedrehtem Distanzteil 7 mit den dem Stützteil 6 angeformten Dübelarmen 5 in eine Öffnung 4 des ersten Bauteiles eingesteckt. In der sich zwischen den Dübelarmen 5 erstreckenden Öffnung 12 ist der Gewindeabschnitt 16 einer Schraube 13 lose eingeschraubt. An die Öffnung 12 schließt sich ein durchmessergrößerer Öffnungsabschnitt an, dessen Wandung ein Einschraubgewinde 9 ausbildet. Dem Einschraubgewinde 9 schließt sich nach einer Übergangsstufe ein durchmessergrößeres Linksgewinde 21 an, in welches das Distanzteil 7 eingeschraubt ist.

Zur Montage werden die in die Öffnung 4 eingesteckten Dübelarme 5 dadurch auseinander gespreizt und in reibschlüssige Verbindung an die Wandung der Öffnung 4 gebracht, indem die Schraube 13 durch Zugriff durch die Öffnung 20 des zweiten Bauteiles gedreht wird. Der Gewindeabschnitt 16 der Schraube 13 schraubt sich sodann in die Öffnung 12 ein und verspreizt die Dübelarme 5.

Wie in Fig. 2 dargestellt wird die Befestigungsschraube 13 soweit hineingedreht, bis ihr Schraubenkopf 15 mit der Unterseite auf der Bodenfläche 14 der Höhlung des Einschraubgewindes 9 liegt. Sodann wird die Verbindungsschraube 3 durch die Öffnung 20 geführt und in die Durchgriffsöffnung 10 des Distanzteiles 7 eingeführt. Dabei kommen seitlich von der Wandung der Durchgriffsöffnung 10 abragende Reibschlußmittel 11 in Anlage an den Gewindeabschnitt der Verbindungsschraube 3. Wird die Schraube 3 gedreht, so wird das Distanzteil 7 reibschlüssig mitgenommen. Zufolge der unterschiedlichen Drehsinne der Gewinde dreht sich das Distanzteil 7 aus dem Stützteil 6 heraus bis es mit seiner Stirn 8 in Anlage tritt zur Unterseite des ersten Bauteiles.

Zur Erzielung des Reibschlusses ist in einen durchmesservergrößerten Abschnitt der Durchgriffsöffnung 10 ein Federelement 19 eingesetzt, welches radial einwärts ragende Nasen ausbildet, die als Reibschlußmittel 11 wirken.

Nachdem die Stirn 8 in Anschlag getreten ist zum zweiten Bauelement wird die Verbindungsschraube 3 weiter eingedreht oder weiter eingesteckt, bis ihr Gewinde in das Einschraubgewinde 9 eintritt. Die Schraube wird dann festgezogen, bis sich ihr Schraubkopf auf das zweite Bauteil legt. Die Stirnseite 18 der Schraube 3 liegt dann mit axialem Abstand oberhalb der Stirnseite 17 des Schraubenkopfes 15.

Beim Ausführungsbeispiel gemäß Fig. 6 ist der Schraubenkopf 15 kegelstumpfförmig ausgebildet. Die Schraube 13 bildet eine Senkkopfschraube aus, die in einer entsprechenden Versenkung des Bodens der Höhlung des Einschraubgewindes 9 eingetreten ist. Auch bei diesem Ausführungsbeispiel ist die Befestigungsschraube 13 bei eingeschraubter Verbindungsschraube 3 völlig unzugänglich.

## Patentansprüche

1. Vorrichtung zum verspannenden Verbinden von mit Abstand zueinander liegenden Bauteilen (1, 2) mittels einer Verbindungsschraube (3), bestehend aus einem in einer Öffnung (4) des ersten Bauteiles (1) durch auseinandergespreizte Dübelarme (5) festlegbarem Stützteil (6) und einem Distanzteil (7), dessen Stirn (8) zufolge relativer Verdrehung des Distanzteiles (7) zum Stützteil (6) in eine Distanzlage zum ersten Bauteil (1) bringbar ist, wobei das Stützteil (6) ein Einschraubgewinde (9) für die Verbindungsschraube (3) aufweist und das Distanzteil (7) eine dazu fluchtende Durchgriffsöffnung (10) mit Reibschlußmitteln, um beim Einschrauben der Verbindungsschraube (3) bis in eine Anschlagstellung der Stirn an das zweite Bauteil (2) drehmitgeschleppt zu werden, **gekennzeichnet durch** ein vor dem Eindrehen der verbindungsschraube (3) in Stütz- (6) und Distanzteil (7) in eine nach dem Eindrehen der Verbindungsschraube (3) verschlossenen Öffnung (12) einbringbares Dübelspreizorgan (13).

2. Vorrichtung nach Anspruch 1, **dadurch gekennzeichnet, daß** das Dübelspreizorgan eine sich mit ihrem Kopf (15) auf der Bodenfläche (14) einer das Einschraubgewinde (9) ausbildenden Höhlung abstützende Befestigungsschraube (13) ist, die mit ihrem Gewindeabschnitt (16) zwischen die Dübelarme (5) geschraubt ist.

3. Vorrichtung nach einem oder mehreren der vorhergehenden Ansprüche, **dadurch gekennzeichnet, daß** die Stirnseite (17) des Dübelspreizorganes (13) mit Abstand zur Stirnseite (18) der Verbindungsschraube (13) liegt.

4. Vorrichtung nach einem oder mehreren der vorhergehenden Ansprüche, **dadurch gekennzeichnet, daß** das Stützteil (6) aus Kunststoff besteht mit materialeinheitlich angeformten Dübelarmen (5).

5. Vorrichtung nach einem oder mehreren der vorhergehenden Ansprüche, **dadurch gekennzeichnet, daß** das Distanzteil (7) aus Kunststoff besteht mit in der Durchgriffsöffnung (10) einliegendem Federelement (19) zur reibschlüssigen Drehmitnahme.

## Claims

1. Device for the bracing connection of structural members (1, 2) located at a distance from each other by means of a connecting bolt (3), consisting of a support portion (6) which can be fixed in an opening (4) of the first structural member (1) by splayed dowel arms (5), and a distance portion (7) whose end face (8) as a result of relative rotation of the distance portion (7) to the support portion (6) can be brought into a position at a distance from the first structural member (1), wherein the support portion (6) comprises a screw-in thread (9) for the connecting bolt (3) and the distance portion (7) comprises a through-opening (10) aligned therewith, with friction locking means in order to be rotationally entrained when the connecting bolt (3) is screwed in as far as a stop position of the end face against the second structural member (2), **characterised by** a dowel expanding member (13) which, before the connecting bolt (3) is screwed into support portion (6) and distance portion (7), can be introduced into an opening (12) which is closed after the connecting bolt (3) is screwed in.

2. Device according to claim 1, **characterised in that** the dowel expanding member is a fastening screw (13) which is supported by its head (15) on the bottom surface (14) of a cavity forming the screw-in thread (9), and which is screwed by its thread section (16) between the dowel arms (5).

3. Device according to one or more of the preceding claims, **characterised in that** the end side (17) of the dowel expanding member (13) is located at a distance from the end side (18) of the connecting bolt (13).

4. Device according to one or more of the preceding claims, **characterised in that** the support portion (6) is made of plastic with dowel arms (5) moulded on in one piece with the material.

5. Device according to one or more of the preceding claims, **characterised in that** the distance portion (7) is made of plastic with a spring element (19) located in the through-opening (10) for friction-locking rotational entrainment.

## Revendications

1. Dispositif d'assemblage par serrage de deux pièces de construction (1, 2), disposées à distance l'une de l'autre, au moyen d'une vis d'assemblage (3), comprenant un organe de support (6), bloqué par des pattes de cheville (5) écartées dans un orifice (4) de la première pièce (1), et un organe d'espacement (7), dont la face frontale (8) peut être amenée dans une position d'espacement par rapport à la première pièce (1) à la suite d'une rotation de l'organe d'espacement (7) par rapport à l'organe de support (6), l'organe de support (6) étant muni d'un filetage (9) de vissage pour la vis d'assemblage (3), et que l'organe d'espacement (7) comporte un orifice de passage (10) aligné avec celui-ci et muni de moyens d'entraînement par friction, afin d'être entraîné en rotation par le vissage de la vis d'assemblage (3) jusque dans une position de butée de la face frontale contre la deuxième pièce (2), **caractérisé par** un organe écarteur de cheville (13) à insérer, avant le vissage de la vis d'assemblage (3), dans l'organe de support (6) et l'organe d'espacement (7), dans un orifice (12) fermé après l'introduction de la vis d'assemblage (3).

2. Dispositif selon la revendication 1, **caractérisé en ce que** l'organe écarteur de cheville (13) est une vis de blocage (13) qui vient en appui avec sa tête (15) sur le fond (14) d'une cavité formant le filetage (9) de vissage et qui est vissée avec sa partie filetée (16) entre les pattes de cheville (5).

3. Dispositif selon l'une ou plusieurs des revendications précédentes, **caractérisé en ce que** la face frontale (17) de l'organe écarteur de cheville (13) est située à distance de la face frontale (18) de la vis d'assemblage (3).

4. Dispositif selon l'une ou plusieurs des revendications précédentes, **caractérisé en ce que** l'organe de support (6) est en matière plastique avec des pattes de cheville (5) moulées dans la même matière.

5. Dispositif selon l'une ou plusieurs des revendications précédentes, **caractérisé en ce que** l'organe d'espacement. (7) est en matière plastique avec un organe à ressort (19) inséré dans l'orifice de passage (10) et destiné à l'entraînement en rotation par friction.
